# EUROPEAN PATENT APPLICATION

(11) **EP 4 450 456 A1**
(43) Date of publication of application: **23.10.2024**
(21) Application number: 23168620.5
(22) Date of filing: 18.04.2023
(51) Int. Cl.: C01B 3/04, B01J 19/08, H05H 1/24, C01B 3/50, C01B 13/02

(54) **A DEVICE AND A METHOD FOR GENERATION OF HIGH-TEMPERATURE REACTIVE GAS FLOW FROM WATER VAPOUR**

(71) Applicant: Quantum Energy d.o.o., 1000 Ljubljana (SI)
(72) Inventor: Royssback, Georg, 1000 Ljubljana (SI)
(74) Representative: Patentni Biro AF d.o.o.

(57) **Abstract**

The present invention belongs to the field of devices and methods for decomposition of water in gaseous phase. The method for generation of high-temperature reactive gas flow from water vapour comprises the following steps:
a) water vaporization,
b) heating water vapor to obtain superheated water vapor with a temperature from 500 to 600 °C,
c) leading the superheated water vapor to a device for generating turbulent flow,
d) leading the turbulent flow of superheated water vapor to a plasma-chemical flow reactor comprising several layers of cathodes and anodes,
e) applying high-voltage direct impulse current of 18.000-60.000 kV to the cathodes and anodes to cause an avalanche corona discharge, said avalanche corona discharge also causing at least one inductive coil to create an electromagnetic filed,
f) creating a high-energy, high-temperature highly reactive gas mixture comprising hydrogen, oxygen and hydroxyl radicals due to splitting of the water molecules under the influence of temperature, electromagnetic field and avalanche corona discharge.

## Description

### Field of the invention

The present invention belongs to the field of devices and methods for decomposition of water in gaseous phase. The invention relates to a device and a method for generation of high-temperature reactive gas flow from water vapour.

### Background of the invention and the technical problem

Water is considered as the most compactly packed fuel that has an ideal ratio of hydrogen and oxygen and can, under certain conditions, transfer to another phase state in the form of combustible or reactive gases. It is known that water at a temperature of 374°C and a pressure of 220 atmospheres changes its properties. Water in this state with added oxygen or ozone oxidizes almost all organic compounds into H₂O and CO₂ in a few minutes.

Some known methods for decomposing water use various plasmas. A plasma is a distinct state of matter comprising a significant number of electrically charged particles sufficient to affect its electrical properties and behaviour. A gas becomes a plasma when the addition of heat or other energy causes a significant number of atoms to release some or all of their electrons. The remaining parts of those atoms are left with a positive charge, and the detached negative electrons are free to move about. The positively charged atoms and the resulting electrically charged gas are said to be ionized. The type of atoms in a plasma, the ratio of ionized to neutral particles and the particle energies all result in a broad spectrum of plasma types, characteristics, and behaviours.

The technical problem addressed by the present invention is design of a device and method for decomposition of water into hydrogen, oxygen and hydroxyl radicals in order to obtain a high-temperature and highly reactive gas flow, which can be used in various settings and devices.

### Prior art

Patent US7384619B2 discloses a method of generating hydrogen and oxygen gas comprising steps of:
- injecting water molecules into a plasma to dissociate the molecules into a hydrogen species and an oxygen species,
- separating the hydrogen species from the oxygen species within the plasma, and
- removing each of the oxygen species and the hydrogen species from the plasma so that the hydrogen species forms gaseous hydrogen and the oxygen species forms gaseous oxygen.

Generation of said plasma may be in the microwave frequency segment of the electromagnetic spectrum.

Patent application WO2005005009A2 describes a method to generate hydrogen and oxygen gas comprising steps of:
- introducing water molecules into an electromagnetic energy field having a frequency commensurate with a selected mode frequency of said molecules to excite said molecules at said mode frequency and further having an energy level commensurate with a molecular bonding energy of said molecules to dissociate said molecules into hydrogen and oxygen species;
- separating said hydrogen and oxygen species upon being dissociated from said water molecules; and
- removing said species such that like species recombine to form hydrogen and oxygen gas.

Both known solutions depend on separation and removal of required species from the gas originating from water molecules, thus contributing to complexity of the equipment needed to perform above-mentioned methods.

### Description of the solution to the technical problem

The invention aims to provide alternative solutions for the decomposition of water steam, which address the shortcomings as well as complexity of the presently known solutions. The technical problem is solved as defined in the independent claims, wherein preferred embodiments of the invention are defined in the dependent claims.

The device for generation of high-temperature reactive gas flow from water vapour according to the first aspect of the invention is divided into four stages (sections, sectors) of water vapor treatment, wherein the main reagent is water and water vapor and wherein the resulting gas flow comprises hydrogen, oxygen and hydroxyl radicals, which may be further separated based on needs of users, systems and subsequent processing. The device comprises:
- a first sector comprising at least:
   ∘ a vaporization device, preferably comprising a reservoir for water, a high-pressure compressor and an ultrasonic nozzle for vaporization of said water,
   ∘ a pipe, preferably a pipe twisted by a bifilar winding method of a spiral from titanium or tungsten carbide, for leading the water vapor, and
   ∘ a heater to heat the water vapor and obtain superheated water vapor at temperature higher than 400 °C, wherein said heater is an inductor or a burner burning natural gas,
- a pipeline for leading the superheated water vapor from the first sector to a second sector,
- the second sector comprising a device for generating turbulent flow, preferably a swirler to create a swirling flow of superheated water vapor,
- a third sector comprising a plasma-chemical flow reactor comprising multilayer electrodes, i.e., cathodes and anodes, wherein preferably the cathode has a 2-3 mm thick quartz glass or ceramic insulation and the anode is a metal string or a metal plate made of stainless-steel, titanium or nichrome with jagged protrusions of a special geometry, and a power supply arranged to apply high-voltage direct impulse current of 18.000-60.000 kilovolts to the cathode and anode, that causes splitting of water vapor into hydrogen, oxygen and hydroxyl radicals,
- a fourth sector comprising:
   ∘ a porous medium, which comprises a wire or shavings of tungsten carbide,
   ∘ an inductor coil extending from the third sector to the fourth sector, and
   ∘ a power supply,
   arranged to perform a continuous steam combustion, which occurs with the release of a large amount of heat, the resulting heat of the hot reaction gases moving further along the reactor tube enter the first sector towards an outlet, and
- the outlet for leading the obtained highly reactive high-temperature gas mixture to a point where it is needed.

Furthermore, in the third sector of the device can be arranged to allow the gas mixture to be filtered using suitable filters in order to obtain pure hydrogen and oxygen gases stored in separate tanks. The pipelines installed downstream of said filters may be provided with compressors to control the intensity of the gas flow.

In an alternative embodiment of the device, the first and fourth sector may be combined to form a joint sector.

The method for generation of high-temperature reactive gas flow from water vapour according to the second aspect of the present invention comprises the following steps:
a) supplying water to a vaporization device to create water vapor,
b) generation of a superheated water vapor with a temperature from 500 to 600 C by heating
c) leading the superheated water vapor to a device for generating turbulent flow, preferably a swirler to create a swirling flow of superheated water vapor,
d) leading the turbulent flow of superheated water vapor to a plasma-chemical flow reactor comprising several layers of cathodes and anodes,
e) applying high-voltage direct impulse current of 18.000-60.000 kilovolts to the cathodes and anodes to cause an avalanche corona discharge, said avalanche corona discharge also causing at least one inductive coil to create an electromagnetic filed,
f) creating a high-energy, high-temperature highly reactive gas mixture comprising hydrogen, oxygen and hydroxyl radicals due to splitting of the water molecules under the influence of temperature, electromagnetic field and avalanche corona discharge as the intermolecular static bonds of the water molecule are split,
g) and preferably leading the high-energy, high-temperature highly reactive gas mixture obtained in the previous step to a heated porous medium boiling zone and combusting atomic hydrogen and atomic oxygen to release heat to propel the gas mixture towards the outlet.

The method also allows a step in which the gas mixture is separated into hydrogen and oxygen by separation through membrane filters. The filtration may be performed with selective membranes made of alloys based on palladium (Pd), preferably obtained by rolling. Efficient membranes with an ultrathin layer of palladium coated with ruthenium or silver may be used to filter hydrogen due to their improved hydrogen permeability.

In a possible embodiment of the method, steps a and b may be combined to perform vaporization and heating together in one step. Additionally, a branch pipe may be provided for the removal of the gas stream split into hydrogen and oxygen, which is directed to the active membrane separator, in which separation takes place gas flow into hydrogen and oxygen with a hydrogen purity of 99.999%. For this purpose, the method in addition or instead of step g) further comprises the following steps:
h) the membrane with high hydrogen permeability is first heated by passing a pulsed electric current through it at a certain frequency,
i) heating of the gas mixture to increase the diffusion capacity of the gas is performed, wherein due to the heating of the membrane element containing the catalyst with superheated steam, upon contact with the gas mixture, hydrogen molecules H₂ are split and H atoms pass through the crystal lattice of the membrane, followed by the formation (recombination) of H₂ molecules,
j) pumping the hydrogen through a nozzle by a compressor into a suitable storage tank, wherein the remaining oxygen is also pumped through a second nozzle by a second compressor in a second storage tank.

Additionally, an ultrasonic wave may be created inside the membrane filter chamber at the resonance frequency of the water molecule, which additionally creates an excited environment and significantly contributes to the intensification of the process.

The device and the method according to the invention are designed to generate high-temperature gas flow, which can be used in the energy sector in plasma-chemical reactors in heating systems as a steam-hydrogen fuel representing a replacement or an alternative for hydrocarbon fuels, thus allowing significant savings in carbon fuels. Further, the gas flow obtained by the invention may be used as or a working agent (steam) for steam turbines, for heating systems of any scale or in any system where high temperatures are required, such as clinker firing in cement production.

### Brief description of drawings

The invention will be described in further detail based on exemplary embodiments and figures, which show:
- Figure 1: The device for generation of high-temperature reactive gas flow from water vapour according to a first embodiment
- Figure 2: The device for generation of high-temperature reactive gas flow from water vapour according to a second embodiment

### Detailed description of the invention

For the production of hydrogen, cooling water is used, which is fed into the cooling jacket of the plasma-chemical reactor. Water enters in a finely dispersed state at a pressure of 200 atmospheres, which reduces water hammer and eliminates the effect of boiling, increases the efficiency of cooling and steam generation. Then the steam enters the superheater, which makes it possible to bring the state of the steam to the desired quality. Next, the superheated steam enters the plasma-chemical reactor, in which the dissociation of water vapor into hydrogen and oxygen occurs through the resonant effects of an electromagnetic field and a barrier corona discharge. As a result, hydrogen, oxygen, and the hydroxyl group OH radicals are formed in abundance.

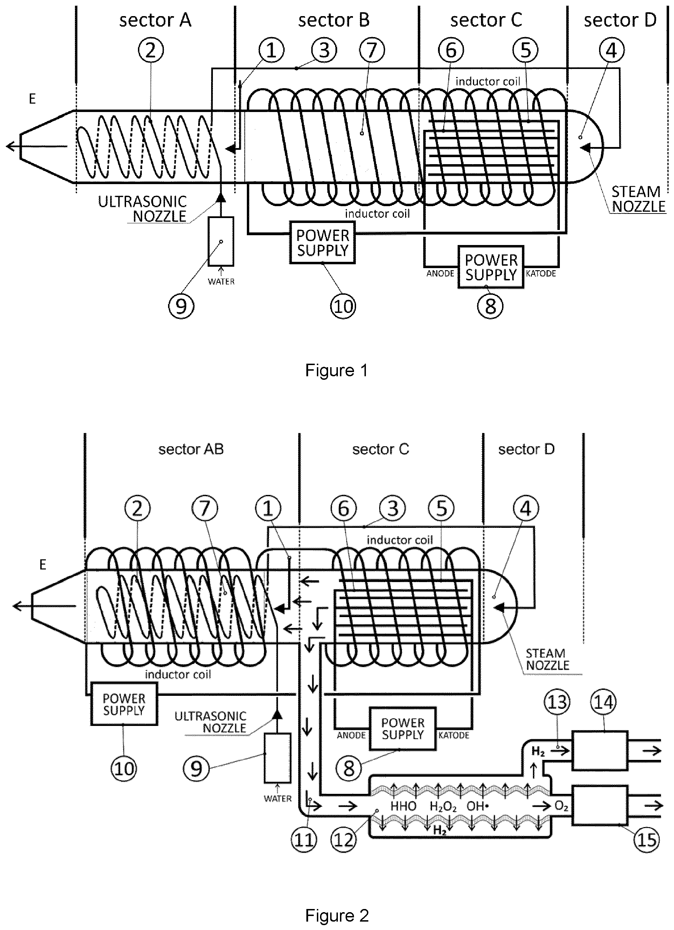

The device for generation of high-temperature reactive gas flow from water vapour according to the first embodiment shown in figure 1 comprises:
- a first sector comprising at least:
   ∘ a vaporization device 9 comprising:
      ▪ a reservoir for water,
      ▪ a high-pressure compressor and
      ▪ an ultrasonic nozzle for vaporization of said water,
   ∘ a pipe 2 twisted by a bifilar winding method of a spiral from titanium or tungsten carbide, for leading the water vapor, and
   ∘ a heater 1 to heat the water vapor and obtain superheated water vapor at temperature higher than 400 °C, wherein said heater is an inductor or a burner burning natural gas,
- a pipeline 3 for leading the superheated water vapor from the first sector A to a second sector D,
- the second sector D comprising a swirler 4 to create a swirling flow of superheated water vapor,
- a third sector C comprising a plasma-chemical flow reactor comprising:
   ∘ multilayer electrodes, i.e., cathodes 5 and anodes 6, wherein
      ▪ the cathodes 5 have a 2-3 mm thick quartz glass or ceramic insulation, and
      ▪ the anodes 6 are a metal string or a metal plate made of stainless-steel, titanium or nichrome with jagged protrusions of a special comb-like geometry, which is essentially a plurality of two-legged protrusions that protrude from the base body into several different, preferably four directions over a length of each anode,
   ∘ and a power supply 8 arranged to apply high-voltage direct impulse current of 18.000-60.000 kilovolts to the cathodes 5 and anodes 6, that causes splitting of water vapor into hydrogen, oxygen and hydroxyl radicals,
- a fourth sector B comprising:
   ∘ a porous medium 7, which comprises a wire or shavings of tungsten carbide,
   ∘ a second inductor coil and
   ∘ a power supply 10,
      arranged to perform a continuous combustion reaction of atomic hydrogen and oxygen occurs with the release of a large amount of heat, the resulting heat of the hot reaction gases moving further along the reactor tube enter the first sector towards an outlet, and
- the outlet E for leading the obtained highly reactive high-temperature gas mixture to a point where it is needed.

In the third section C, the high-voltage direct impulse current of 18.000-60.000 kilovolts is applied to the cathode and anode, which subsequently forms an avalanche corona discharge over the entire area of the device. An electromagnetic field is created around the reactor by winding an inductive coil around sectors B and C, so that said sectors share a high frequency induction electromagnetic field. The high frequency induction field has two functions. In the sector C, the induction field, together with the corona discharge occurring inside the reactor, creates a resonance of vibrational frequencies that correspond to the oscillation of electromagnetic static intramolecular bonds in the water molecule, and at the same time heats up the electrodes due to the inductance of the Foucault currents. In this case, Under the influence of temperature, electromagnetic field and avalanche corona discharge the intermolecular static bonds of the water molecule are split into hydrogen and oxygen, and many hydroxyl radicals, resulting in a high-energy highly reactive gas mixture that is approximately 3.6 times more energetic than natural gas. In the sector B high-frequency inductive electromagnetic field heats the porous medium 7 forming a boiling zone. Thus, the split steam into hydrogen and oxygen from section C enters section B where it instantly ignites, since the ignition temperature of hydrogen and oxygen is lower than the temperature in section B. Thus, in the porous medium of section B, a continuous combustion reaction of atomic hydrogen and oxygen occurs with the release of a large amount of heat, the resulting heat of the hot reaction gases moving further along the reactor tube enter the zone of section A, where the bifilar spiral pipe 2 is heated. Water is supplied to the bifilar pipe 2 by a high-pressure compressor 9 through an ultrasonic nozzle into the receiving ultrasonic chamber, where it is sprayed into a finely dispersed fraction of 0.2-1 mkm in size. This provides an instant transition from the liquid phase to the vapor phase, thereby greatly intensifying the process of vaporization, thereby looping the process of preparing the formation of a combustible vapor-gas mixture with subsequent combustion in fluidized porous bed 7 and highly efficient thermal energy output. Further, thermal energy can be used to produce steam, which can be further split into hydrogen and oxygen and separated into hydrogen and oxygen by separation through membrane filters.

To produce pure hydrogen and oxygen, the device can have additional modifications. In this second embodiment of the device as shown in figure 2, the first A and fourth sector B are combined to form a joint sector. Thus, evaporation and heating of water occur simultaneously in sector AB. Between sections AB and C a branch pipe [11] is provided for the removal of the gas stream split into hydrogen and oxygen, which is directed to an active membrane separator, in which separation takes place gas flow into hydrogen and oxygen with a hydrogen purity of 99.999%. Said separation (filtration) is achieved with selective membranes made of alloys based on palladium Pd, preferably obtained by rolling. Efficient membranes with an ultrathin layer of palladium coated with ruthenium or silver may be used to increase its hydrogen permeability.

In a possible embodiment, the membrane element is first heated by passing a pulsed electric current through it at a certain frequency. Heating of the gas mixture (to increase the diffusion capacity of the gas) takes place in the joint section AB. Due to the heating of the membrane element containing the catalyst with superheated steam, upon contact with the gas mixture, hydrogen molecules H2 are split and H atoms pass through the crystal lattice of the membrane element, followed by the formation (recombination) of H2 molecules. To prevent sticking of molecules and outgoing oxygen atoms on the inner working surface of the membrane filter, an ultrasonic wave may be created inside the membrane filter chamber at the resonance frequency of the water molecule, which additionally creates an excited environment and significantly contributes to the intensification of the process. All other components of the gas mixture are not able to overcome the membrane barrier due to the significant size of their molecules and atoms, they pass further, and hydrogen is pumped into a storage tank through the nozzle 13 by a compressor 14, wherein oxygen is pumped into a storage tank by a compressor 15. The intensity of the gas flow is controlled with said compressors 14 and 15.

## Claims

1. A device for generation of high-temperature reactive gas flow from water vapour, wherein the device is divided into four sectors of water vapor treatment, wherein the main reagent is water and water vapor and wherein the resulting gas flow comprises hydrogen, oxygen and hydroxyl radicals, said device comprising:
- a first sector (A) comprising at least:
∘ a vaporization device for vaporization of said water,
∘ a pipe (2) for leading the water vapor, and
∘ a heater (1) to heat the water vapor and obtain superheated water vapor at temperature higher than 400 °C,
- a pipeline (3) for leading the superheated water vapor from the first sector to a second sector,
- the second sector (D) comprising a device (4) for generating turbulent flow,
- a third sector (C) comprising a plasma-chemical flow reactor comprising multilayer electrodes, i.e., cathodes (5) and anodes (6), and a power supply (8) arranged to apply high-voltage direct impulse current of 18.000-60.000 kilovolts to the cathodes (5) and anodes (6), that causes splitting of water vapor into hydrogen, oxygen and hydroxyl radicals,
- a fourth sector (B) comprising:
∘ a porous medium (7), which comprises a wire or shavings of tungsten carbide,
∘ an inductor coil extending in the fourth and the third sector, and
∘ a second power supply (10),
arranged to perform a continuous steam combustion reaction with a release of a large amount of heat, the resulting heat of the hot reaction gases moving further along the reactor tube that enter the first sector towards an outlet, and
- the outlet (E) for leading the obtained highly reactive high-temperature gas mixture to a point where it is needed.

2. The device according to claim 1, wherein the vaporization device comprises a reservoir for water, a high-pressure compressor and an ultrasonic nozzle for vaporization of said water.

3. The device according to claim 1 or claim 2, wherein the pipe in the first sector (A) is a pipe (2) twisted by a bifilar winding method of a spiral from titanium or tungsten carbide.

4. The device according to any of the preceding claims, wherein the heater (1) is an inductor or a burner burning natural gas.

5. The device according to any of the preceding claims, wherein the device (4) for generating turbulent flow is a swirler to create a swirling flow of superheated water vapor.

6. The device according to any of the preceding claims, wherein each cathode (5) has a 2-3 mm thick quartz glass or ceramic insulation and each anode (6) is a metal string or a metal plate made of stainless-steel, titanium or nichrome with jagged protrusions.

7. The device according to the preceding claim, wherein jagged protrusions are a plurality of two-legged protrusions that protrude from the base body into several different, preferably four directions over a length of each anode (6).

8. The device according to any of the preceding claims, wherein a branch pipe (11) is provided for the removal of hydrogen and oxygen from hydroxyl radicals in the third sector (C).

9. The device according to the preceding claim, wherein in the third sector (C) a filter (12) is provided to allow the gas mixture to be filtered in order to obtain pure hydrogen and oxygen.

10. The device according to the preceding claim, wherein filtration is performed with selective membranes made of alloys based on palladium (Pd), preferably with an ultrathin layer of palladium coated with ruthenium or silver obtained by rolling, and wherein pipelines for pure hydrogen and oxygen installed downstream of said filters are provided with compressors to control the intensity of the gas flow.

11. The device according to any of the preceding claims, wherein the first sector (A) and fourth sector (B) are combined to form a joint sector (AB).

12. A method for generation of high-temperature reactive gas flow from water vapour, said method comprising the following steps:
a) supplying water to a vaporization device to create water vapor,
b) generation of a superheated water vapor with a temperature from 500 to 600°C by heating,
c) leading the superheated water vapor to a device for generating turbulent flow,
d) leading the turbulent flow of superheated water vapor to a plasma-chemical flow reactor comprising several layers of cathodes and anodes,
e) applying high-voltage direct impulse current of 18.000-60.000 kV to the cathodes and anodes to cause an avalanche corona discharge, said avalanche corona discharge also causing at least one inductive coil to create an electromagnetic filed,
f) creating a high-energy, high-temperature highly reactive gas mixture comprising hydrogen, oxygen and hydroxyl radicals due to splitting of the water molecules under the influence of temperature, electromagnetic field and avalanche corona discharge as the intermolecular static bonds of the water molecule are split.

13. The method according to the preceding claim, wherein the method further comprises a step
g) leading the high-energy, high-temperature highly reactive gas mixture obtained in the previous step to a heated porous medium boiling zone and combusting atomic hydrogen and atomic oxygen to release heat to propel the gas mixture towards the outlet.

14. The method according to any claim from 14 to 15, wherein steps a and b are combined to perform vaporization and heating together in one step.

15. The method according to any claim from 14 to 16, wherein the method in addition or instead of step g) further comprises the following steps:
h) the membrane with high hydrogen permeability is first heated by passing a pulsed electric current through it at a certain frequency,
i) heating of the gas mixture to increase the diffusion capacity of the gas is performed, wherein due to the heating of the membrane element containing the catalyst with superheated steam, upon contact with the gas mixture, hydrogen molecules H₂ are split and H atoms pass through the crystal lattice of the membrane, followed by the formation (recombination) of H₂ molecules,
j) pumping the hydrogen through a nozzle by a compressor into a suitable storage tank, wherein the remaining oxygen is also pumped through a second nozzle by a second compressor in a second storage tank.

16. The method according to the preceding claim, wherein an ultrasonic wave is created inside the membrane filter chamber at the resonance frequency of the water molecule.
